# EUROPÄISCHE PATENTSCHRIFT

(11) **EP 1 319 491 B1**
(45) Veröffentlichungstag und Bekanntmachung des Hinweises auf die Patenterteilung: **18.01.2006**
(21) Anmeldenummer: 02026861.1
(22) Anmeldetag: 02.12.2002
(51) Int. Cl.: B29C 47/88, B29C 63/00, B29C 33/68, B29D 7/00, B29K 75/00

(54) **Verfahren zur Herstellung eines transparenten Flachfilms aus aliphatischem thermoplastischem Polyurethan**
Process of extrusion casting a transparent thermoplastic aliphatic polyurethane film
Procédé de extrusion en bande d'un film transparent en polyuréthane thermoplastique aliphatique

(30) Priorität: 14.12.2001 DE 10161387
(43) Veröffentlichungstag der Anmeldung: 18.06.2003
(73) Patentinhaber: Bayer MaterialScience AG, 51368 Leverkusen (DE)
(72) Erfinder: Winkler, Jürgen, 40764 Langenfeld (DE); Nickel, Jörg, 41539 Dormagen (DE); Meyer, Klaus, 41539 Dormagen (DE); Peerlings, Henricus, Dr., 42699 Solingen (DE)

(56) Entgegenhaltungen:
- EP-A- 0 753 403
- EP-A- 1 090 940
- DD-A- 129 632
- FR-A- 1 434 514
- JP-A- 57 116 626
- US-A- 5 534 209
- US-A- 5 876 852
- US-B1- 6 326 128
- DATABASE WPI Section Ch, Week 198424 Derwent Publications Ltd., London, GB; Class A32, AN 1984-149589 XP002229589 & JP 59 078850 A (TOPPAN PRINTING CO LTD), 7. Mai 1984 (1984-05-07)
- PATENT ABSTRACTS OF JAPAN vol. 013, no. 257 (M-837), 14. Juni 1989 (1989-06-14) & JP 01 061219 A (MITSUI TOATSU CHEM INC), 8. März 1989 (1989-03-08)
- PATENT ABSTRACTS OF JAPAN vol. 2000, no. 15, 6. April 2001 (2001-04-06) & JP 2000 335644 A (UNITEM:KK;TAKEDA SANGYO:KK), 5. Dezember 2000 (2000-12-05)

## Beschreibung

Die vorliegende Erfindung betrifft ein Verfahren zur Herstellung eines transparenten Flachfilms aus thermoplastischem Polyurethan (TPU), welcher durch zweiseitige Kaschierung mit Folien aus einem höherschmelzenden Material und anschließender Entfernung dieser Folien erhalten wird, sowie seine Verwendung.

Thermoplastische Polyurethane (TPU) sind wegen ihrer guten Elastomereigenschaften und thermoplastischer Verarbeitbarkeit von großer technischer Bedeutung. Eine Übersicht über die Herstellung, Eigenschaften und Anwendungen von TPU wird z.B. in G. Becker, D. Braun, Kunststoff-Handbuch, Band 7, "Polyurethane", München, Wien, Carl Hanser Verlag, 1983 oder in M. Szycher, Handbook of Polyurethanes, CRC Press LLC, Boca Raton, Fl. USA, 1999 gegeben.

Die Verarbeitung von Kunststoffen zu Flachfilmen ist ein Prozess, der schon seit langem bekannt ist und der z.B. im Handbuch der Kunststoffextrusionstechnik, Hensen, Knappe und Potente, Teil II, Extrusionsanlagen, Hanser Verlag, München, Wien, 1986, beschrieben wird.

In DD-A 129 632 wird ein Verfahren zur Herstellung von einschichtigen, dünnen, warmklebenden Polyurethanfolien einer Dicke von 10 bis 50 µm beschrieben, wobei bei der Extrusion dieser Folien mittels Breitschlitzdüse zwei Stützfolien eingesetzt werden und die Stützfolie mit der geringeren Delaminierungskraft als umlaufendes Band ausgeführt sein kann.

US-A 5 534 209 offenbart ein Verfahren zur Herstellung von Flüssigkristallpolymerfolien, wobei das Polymermaterial zwischen zwei Trägermembranen eingeführt wird und die Trägermembranen mit dem Polymermaterial durch zwei Rollen geführt werden. Die Trägermembranen können nach Abkühlung entfernt werden.

In JP-A 0 106 1219 werden Laminate beschrieben, die aus einer Trennschicht und einem thermoplastischen Elastomer, wie z.B. Polyurethan bestehen. Sie werden durch Coextrusion hergestellt, indem eine stabile Substratplatte mit einem Laminat aus thermoplastischem Elastomer und Polyolefin-Trennschicht beaufschlagt wird.

Zur Herstellung von transparenten TPU-Flachfilmen wird normalerweise das Material in der Schmelze über einen Extruder verarbeitet, wobei anschließend ein oder mehrere Male verpresst wird. Nachteile bei diesem Verfahren sind die hohen Handhabungskosten, die Gefahr der Verschmutzung durch Staub, Fehler beim Verpressen, Belagsbildung und Kleben auf den Glättwalzen.

Bei der Verarbeitung von thermoplastischen Polyurethanen zu Flachfilmen werden häufig Gelteilchen wahrgenommen, welche für die optische Qualität des Produktes störend sind. Dies ist besonders störend, wenn es sich um transparente Typen handelt (wie z.B. in EP-A 1 090 940 beschrieben), bei denen neben Transparenz zusätzliche Eigenschaften, wie Lichtstabilität und Flexibilität, gefordert werden.

Aufgabe der vorliegenden Erfindung war es daher, ein Verfahren zur Herstellung fehlerfreier, transparenter TPU-Flachfilme zur Verfügung zu stellen, bei dem auf arbeitsintensive Verpressungen verzichtet werden kann und bei dem die Problematik der Verschmutzung, Fehler beim Verpressen, Belagsbildung und Kleben an Glättwalzen nicht auftritt.

Die Aufgabe konnte mit dem erfindungsgemäßen Verfahren gelöst werden, bei dem in einem Schritt (ohne zusätzliches Verpressen der Flachfilme) transparente, glatte, fehlerfreie TPU-Flachfilme hergestellt werden können.

Gegenstand der Erfindung ist ein Verfahren zur Herstellung eines transparenten Flachfilms aus aliphatischem thermoplastischem Polyurethan gemäß dem Anspruch 1. Das Verfahren umfasst die Schritte worin
a) ein geschmolzenes aliphatisches thermoplatisches Polyurethan mit einer Temperatur von 150 bis 220°C zwischen zwei Folien eines Polycarbonates mit einer Temperatur von 0 bis 80°C eingeführt wird,
b) das Produkt aus a) zwischen zwei gegenläufigen Rollen mit einer Temperatur zwischen 10°C bis 70°C durchgeführt wird,
c) anschließend abgekühlt wird, und
d) die Folien aus dem Polycarbonat mechanisch entfernt werden.

Polycarbonat wird aufgrund seiner guten Formbeständigkeit bei geringer Wanddicke, seinem hohen Schmelzpunkt und seiner optischen Klarheit (gegebenenfalls erforderlich für eine Fehler-Bewertung am Flachfilm) eingesetzt.

Bevorzugt werden Folien aus Polycarbonat mit einer Dicke von 0,1 bis 5 mm, besonders bevorzugt von 0,3 bis 3 mm, ganz besonders bevorzugt von 0,5 bis 2 mm, eingesetzt.

Das aliphatische, transparente TPU ist beispielsweise in EP-A 1 090 940 beschrieben.

Der nach dem erfindungsgemäßen Verfahren hergestellte TPU-Flachfilm weist bevorzugt eine Dicke von 0,1 bis 5 mm, besonders bevorzugt von 0,3 bis 3 mm, ganz besonders bevorzugt von 0,5 bis 2,5 mm auf.

Das thermoplastische Polyurethan (TPU) wird vorzugsweise mittels eines Extruders vor der Einführung zwischen die Folien des Polycarbonates aufgeschmolzen.

Die Folien aus Polycarbonat werden vorzugsweise nach ihrer Entfernung vom TPU-Flachfilm im Verfahren im Schritt a) erneut eingesetzt.

Die nach dem erfindungsgemäßen Verfahren hergestellten TPU-Flachfilm werden insbesondere für optische Anwendungen eingesetzt.

Die Erfindung soll anhand der nachfolgenden Beispiele näher erläutert werden.

### Beispiele

### Beispiel 1 (Vergleich)

In einem Extruder wurde aus einem TPU-Granulat (Texin® DP7-3007; Bayer Corp.) eine homogene Schmelze erzeugt (Massetemperatur von etwa 160°C). Diese TPU-Schmelze wurde über eine Breitschlitzdüse in eine Glättwerk/Chill-Rolle eingetragen. Im Glättwerk wurde aus der Schmelze bei Walzentemperaturen von 20°C der Flachfilm geformt, kalibriert und geglättet. Der Flachfilm wurde nach dem Erkalten geschnitten. Anschließend wurden die geschnittenen Flachfilme zuerst mit mattierten Blechen (Rauhtiefe 1,5 - 2 µm) und danach mit hochglanzpolierten Blechen in Etagenpressen bei Temperaturen von etwa 140°C verpresst. Dabei wurde ein transparenter, lichtstabiler TPU-Flachfilm mit einer Dicke von 2 mm erzeugt.

### Beispiel 2 (erfindungsgemäß)

In einem Extruder wurde aus einem TPU-Granulat (Texin® DP7-3007; Bayer Corp.) eine homogene Schmelze erzeugt (Massetemperatur von etwa 160°C). Diese TPU-Schmelze wurde über eine Breitschlitzdüse in eine Glättwerk/Chill-Rolle eingetragen. Gleichzeitig liefen zwei PC-Folien mit Raumtemperatur in den Walzenspalt, so dass die TPU-Schmelze zwischen die PC-Folien eingetragen wurde. Im Glättwerk wurde die Schmelze zwischen den PC-Folien bei Walzentemperaturen von etwa 20°C geformt, kalibriert und geglättet. Der Folienverbund wurde nach dem Erkalten geschnitten bzw. zu Rollen aufgewickelt. Die beiden PC-Folien verblieben als Schutz bis zur Endanwendung auf dem TPU-Flachfilm und wurden dann einfach und rückstandsfrei von dem TPU-Flachfilm abgezogen. Sie können wieder verwendet werden. Dabei wurde ein transparenter, lichtstabiler TPU-Flachfilm mit einer Dicke von 2 mm erzeugt.

## Patentansprüche

1. Verfahren zur Herstellung eines transparenten Flachfilms aus aliphatischem thermoplastischem Polyurethan, umfassend die Schritte
a) ein geschmolzenes aliphatisches thermoplastisches Polyurethan mit einer Temperatur von 150 bis 220°C zwischen zwei Folien eines Polycarbonates mit einer Temperatur von 0 bis 80°C einführen,
b) das Produkt aus a) zwischen zwei gegenläufige Rollen mit einer Temperatur zwischen 10°C und 70°C durchführen,
c) das Produkt aus b) abkühlen, und
d) die Folien aus dem Polycarbonat mechanisch entfernen.

2. Verfahren gemäß Anspruch 1, **dadurch gekennzeichnet, dass** zwischen den Schritten c) und d) das Produkt aus c) geschnitten wird.

3. Verfahren gemäß Anspruch 1, **dadurch gekennzeichnet, dass** der Flachfilm aus thermoplastischem Polyurethan eine Dicke von 0,1 bis 5 mm aufweist.

4. Verfahren gemäß Anspruch 1, **dadurch gekennzeichnet, dass** die Folien aus dem Polycarbonat eine Dicke von 0,1 bis 5 mm aufweisen.

5. Verfahren gemäß Anspruch 1, **dadurch gekennzeichnet, dass** die Folien aus dem Polycarbonat nach ihrer Entfernung gemäß Schritt d) im Verfahren im Schritt a) wieder eingesetzt werden.

## Claims

1. A process for the production of a transparent flat film from aliphatic thermoplastic polyurethane, comprising the steps
a) introducing a molten aliphatic thermoplastic polyurethane with a temperature of 150 to 220°C between two sheets of a polycarbonate with a temperature of 0 to 80°C,
b) passing the product from a) between two contrarotating rolls with a temperature of between 10°C and 70°C,
c) cooling the product from b) and
d) mechanically removing the sheets of polycarbonate.

2. A process according to claim 1, **characterised in that**, between steps c) and d), the product from c) is cut.

3. A process according to claim 1, **characterised in that** the flat film of thermoplastic polyurethane has a thickness of 0.1 to 5 mm.

4. A process according to claim 1, **characterised in that** the sheets of polycarbonate have a thickness of 0.1 to 5 mm.

5. A process according to claim 1, **characterised in that** the sheets of polycarbonate, once removed in step d), are reused in the process in step a).

## Revendications

1. Procédé de préparation d'un film plat transparent à partir de polyuréthanne thermoplastique aliphatique comprenant les étapes dans lesquelles
a) un polyuréthanne thermoplastique aliphatique fondu à une température de 150 à 220°C est introduit entre deux feuilles d'un polycarbonate à une température de 0 à 80°C;
b) le produit de a) est passé entre deux rouleaux tournant en sens inverse à une température située entre 10°C et 70°C;
c) puis refroidi et
d) les feuilles du polycarbonate sont éliminées mécaniquement.

2. Procédé selon la revendication 1, **caractérisé en ce que** le produit de c) est découpé entre les étapes c) et d).

3. Procédé selon la revendication 1, **caractérisé en ce que** le film plat en polyuréthanne thermoplastique présente une épaisseur de 0,1 à 5 mm.

4. Procédé selon la revendication 1, **caractérisé en ce que** les feuilles de polycarbonate présentent une épaisseur de 0,1 à 5 mm.

5. Procédé selon la revendication 1, **caractérisé en ce que** les feuilles de polycarbonate sont réutilisées après leur enlèvement selon l'étape d) dans le procédé dans l'étape a).
